# EUROPEAN PATENT APPLICATION

(11) **EP 4 517 198 A2**
(43) Date of publication of application: **05.03.2025**
(21) Application number: 24218789.6
(22) Date of filing: 30.12.2020
(51) Int. Cl.: F24F 1/032

(54) **A METHOD FOR COOLING OF A USER SPACE AND AIR CONDITIONING ARRANGEMENT**

(30) Priority: 23.01.2020 SE 2050061
(62) Divisional of application: 20914842.8
(71) Applicant: Iceheart AB, 103 95 Stokholm (SE)
(72) Inventor: FJAESTAD, Adam, ARVIKA (SE)
(74) Representative: Bjerkén Hynell KB

(57) **Abstract**

The invention relates to an air condition arrangement for cooling of a space, comprising a cooling heat exchanger loop (20, 4, 30, 5) having a fluid in operational connection with an evaporator (2) and a condenser (3), wherein a cooling media (31), preferably having a temperature in the range of 0- +2 °C, in said condenser (3) is arranged to absorb heat from said fluid, which fluid in turn absorbs heat from air flowing through said evaporator (2) to provide a cooled air flow out from said air condition arrangement (1), characterized in that said cooling media (31) at least partly includes ice and that said cooling media (31) is arranged to drive said heat exchanger loop (20, 4, 30, 5).

## Description

### TECHNICAL FIELD

The present invention is a first generation divisional application from EP-A- 4107439, filing nr. 20914842.8, which relates to a method and an air condition arrangement for cooling of a user space, comprising the steps of providing an air condition arrangement including a cooling media producing heat exchanger loop having a low pressure tubing in operational connection with a cooling media, which cooling media includes water/ice.

### BACKGROUND ART

Many kinds of air conditioning arrangements are known, but most require large equipment/space and/or large amount of energy supply, making conventional methods generally costly and/or inefficient.

An ordinary portable air conditioner produce approximately twice as much heat as it produces cooling effect, which is due to the fact that delivery of cooling air occurs at the same time as heat needs to be ventilated away from the space to be cooled. This is normally achieved by means of a flexible tube that may be put through a partly open window, which may cause an inflow of outdoor air. Since the outdoor air normally is at an higher temperature then the desired room temperature present normal portable air conditioning systems often are contra productive since a considerable flow of warm air is drawn into the room at the same time as a relative small volume around the portable air conditioner is cooled.

The above problem may be minimized by the use of a cooling media, that may be created before performing cooling, e.g. ice. The principle of thermal storage using ice is well known since long, e.g. US433316 from 1890, disclosing a large cooling space where ice is used to cause self-draught and cool a storage space. Further there are known personal air conditioning system that may be used, for example, to cool a tent, as shown by US2005150251, wherein there is used a cooling lid that fits over a typical insulated cooler containing ice, wherein the cooling lid includes a heat transfer tower configured to transfer heat from the ice to a heat sink within the cooling lid and a fan draws air into the cooling lid, across the heat sink. This kind of air conditioners do have issues regarding handling.

Also internal melt ice-on-coil technology is widely known in industry or commercial buildings for redistributing and shaving cooling loads. In particular, ice is formed in a tank with the aid of a refrigeration system during off peak hours. Thermal energy is transferred to and from the ice by circulating brine in pipes which directly contact the ice or with water which directly contacts and melts the ice to generate cold water. In each of these applications, a pump is required to circulate fluid flow in and out of the storage zone and towards the area to be cooled. It is also known to use this principle in movable air conditioning arrangements, e.g. as disclosed in US2006225453.

From US2008104971 and US5005368 there are known air conditioning arrangements useful in first producing and storing thermal energy in the form of ice and subsequently using that thermal energy for cooling, which disclose installations that are complex and therefore costly.

There is therefore a need for a convenient and cost efficient air conditioning arrangement suitable for use in houses and/or office buildings, which preferably is also more flexible and more preferred without adding unduly to the cost of a house and/or an office building.

### DISCLOSURE OF THE INVENTION

The object of the present invention is to eliminate or at least to minimize the problems described above. This is achieved by an air conditioning arrangement according to the appended claim 1.

Thanks to the invention there is provided a novel concept of an air conditioning arrangement where the advantages of heat pump, in a very efficient manner, may be used to improve living conditions in a user space, by means of using water/ice as the basic cooling media. Examples of applications where this technology can provide advantages are screen walls in offices or homes, silent mobile office rooms so-called pods, location-built office rooms or similar applications.

Further advantages of the invention will be readily understood by the person skilled in the art in view of the detailed description below.

### BRIEF DESCRIPTION OF THE FIGURES

In the following the invention will be described more in detail with reference to the enclosed figures where;
- Fig.1: shows a perspective view of an air conditioning arrangement according to an embodiment not included in of the invention,
- Fig.2: shows a cross-sectional view along line A-A in Fig.1, not included in the invention,
- Fig.3: shows a cross-sectional view along line B-B in Fig. 2, not included in the invention,
- Fig.4: shows a central cross-sectional view parallel to line D-D in Fig. 2, not included in the invention,
- Fig.5: shows a cross-sectional view along line D-D in Fig. 2, not included in the invention,
- Fig. 6: shows an enlarged view of a similar perspective as in Fig 3, not included in the invention,
- Fig. 7: shows a modified arrangement by means of a corresponding enlarged view of the encircled area as in Fig 3, not included in the invention,
- Figs. 8-11: show embodiments of the invention.

### DETAILED DESCRIPTION

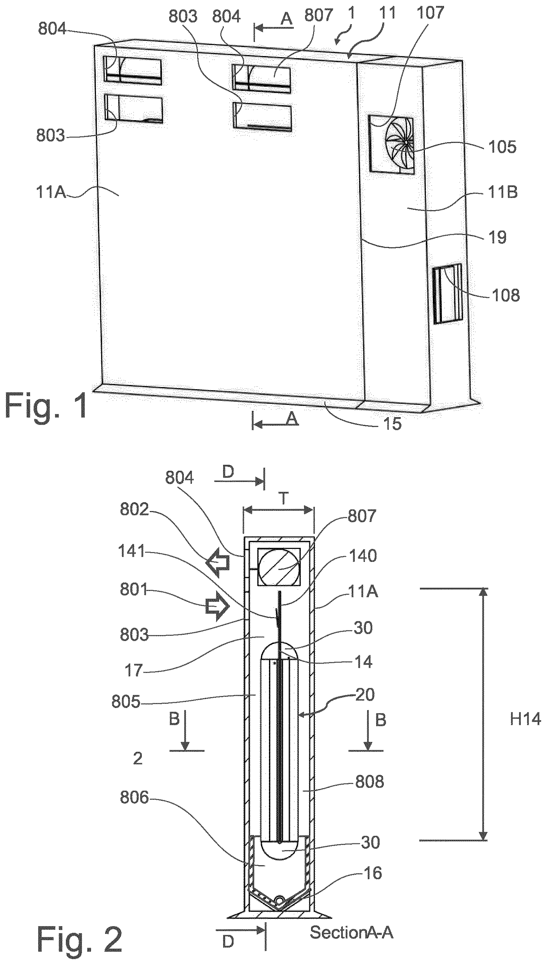

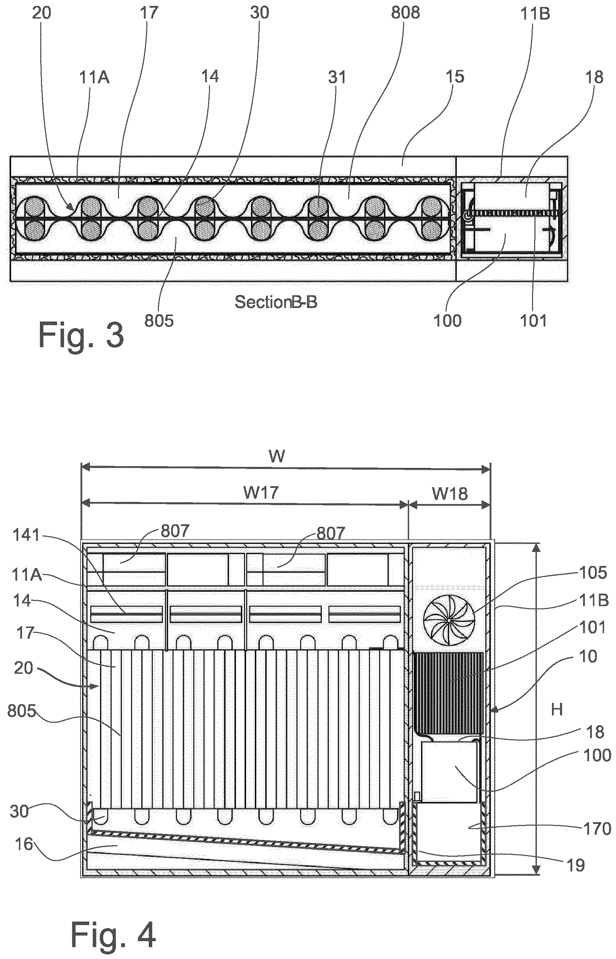

In figure 1, not included in the invention, there is shown an air conditioning arrangement 1 in accordance with the preferred embodiment according to the invention. The air conditioning arrangement 1 comprises a housing 11 enclosing functional details of the arrangement, wherein said housing 11 preferably comprises a fist housing part 11A enclosing a first space 17 and a second housing part 11B enclosing a second space 18 (see Fig. 4). In the housing 11 there is at least one inlet 803 for air 801 (see Fig. 2) entering into the arrangement 1 from the surroundings and at least one outlet 804 for delivery of cool air 802 (see Fig. 2). There is also an inlet 107 for air intended for production of cooling media 31 and an outlet 108 for that air.

The housing 11 may have a transversal dividing wall 19 that divides the housing into a first space 17 for parts included in a cooling heat exchanger 2 and a second space 18 for some parts of a cooling media producing heat exchanger loop 10, wherein the first space 17 is substantially larger than the second space 18. Preferably the outer walls of the housing 11 has a horizontally extending cross-section that is substantially the same along its vertical extension, wherein both the width W (e.g. 1500-3000 mm) and height H (e.g. 1000-2000 mm) are many times larger than the thickness T (e.g. 50-250 mm), thereby providing a flat shaped housing 11. The transversal dividing member 19 preferably extends vertically at a position within the housing 11 that provides a width W17 of the first space to be larger than the width W18 of the second space 18, i.e. W17 > W18, preferably 8 x W18 > W17 > 3 x W18.

It is evident that for the skilled person the basic principle as described in connection with Fig. 1 may be used together with a variety of applications, wherein a preferably movable, flat, or generally flat shaped air conditioning arrangement is desired and that the size may vary depending on different needs. Of course, the larger it is made the more cooling media it may contain and consequently produce more cold air.

A beneficial application for use is a partitioning wall, e.g. a partitioning wall that is used in office environment to both divide a larger space into individual spaces and at the same time also provide extra cooling, in a flexible manner that may be individually adapted to different needs. Such a wall shaped housing may have vertical extension H in the range of 1200-2000 mm, a horizontal extension W in the range of 800-3000 mm, more preferred 1000-2500 and a thickness (T) in the range of 50-250 mm, more preferred 80-110 mm.

As can be seen in figures 2, 3, 4 and 5, not included in the invention,
the air 801 passing in through the inlet 803 enters into the first space 17 and may there be passed through a U-shaped flow channel 805, 806, 808 before again leaving the arrangement through the outlet 804. This U-shaped air channel comprises a downwardly directed path 805 on a first side of a longitudinal partitioning wall 14 within the first space 17. The downwardly directed path 805 opens up into a return space 806, i.e. below the partitioning wall 14. At the second side of the partitioning wall 14 there is an upward flow channel 808, leading air upwards from the return space 806. Preferably there is arranged a fan 807 that forces air through the U-shaped channel.

The vertically extending longitudinal partitioning wall 14 is substantially centrally positioned within the first space 17, having a height H14 that is smaller than the height H of the housing 11, thereby facilitating providing an open passages below its lower horizontal edge and also providing space above of its upper horizontal edge, for a flow channel that enables air to flow across form the return space 806 to an outlet 804 on the same side as the inlet 803. Hence, the longitudinal partitioning wall 14 may assist in creating the U-shaped flow channel 805, 806, 808, that may provide a synergetic solution. Further it preferably extends from inner side to inner side wall in the first space 17 to provide a support function. In the preferred embodiment it supports the low pressure tubing 106 and/or also supports a cooling media storage member 20, which in turn supports he cooling media 31.

Further, the partitioning wall 14 is preferably arranged with openings 140 in the upper region thereof, preferably in level with the inlet 803, enabling some inlet air 801 to bypass the U-shaped flow channel 805, 806, 808 and directly enter into the flow channel with the fan 807. A control member 141, e.g. a throttle plate, may preferably be arranged such that the amount of bypassing air may be controlled. Hence, throttle plate 141 may control the amount of air that goes past the cooling media 31 and the part that goes straight to the fan 807, providing an ability to mix ambient air with cold air and thus control cooling effect and air temperature of the outlet air 802. The speed of the fan 807 may also be used to control the amount of outlet air 802 and thereby control the cooling effect and/or level of comfort in combination with bypass control. Most people desires that the outlet air 802 provides a cooling effect at a relatively warm temperature, since a larger amount of outlet air 802 at a higher temperature level T1, e.g. 18 degrees Celsius, is experienced as more comfortable than a smaller amount of outlet air 802 at a lower temperature level T2, e.g. 8 degrees Celsius, which effect, i.e. 802 = T1, may be achieved by opening the throttle plate 141 to provide some bypass and at an increased fan speed that may provide the same cooling effect as using now bypass and a lower fan speed, i.e. 802 = T1.

As can be seen in figure 4, not included in the invention,
the channels 805, 806 are arranged to run along a cooling media storage member 20, which is in thermal conducting contact with a cooling media 31. Preferably the cooling media 31 is contained in resilient tube formed members 30 that are resilient. Preferably these are made of an elastic material to provide for easy expansion and contraction of the cooling media 31. In one exemplified embodiment according to the invention the tube formed members 30 are made of bicycle wheel inner tubes. The tubes 30 may be in the form of separate longish elements or arranged as a u-formed member or indeed in the form of a loop as known from bicycle inner wheel tubes.

At the partitioning wall 14 there is arranged a low pressure tubing 106 of a heat exchanger loop 10 that may be used to lower the temperature of the cooling media 31, i.e. produce and store cooling media 31. In the preferred embodiment the cooling media 31 is water and the heat exchange loop 10 is used to produce ice within the tubes 30. The heat exchanger 10 is preferably of a conventional kind with a tubing 103, 106 containing a refrigerant such as R134a, wherein the tubing 103, 106 forms a closed loop. The heat exchanger 10 comprises a low-pressure part 10L that mainly includes the low pressure tubing 106 running along the partitioning wall 14 and a high-pressure part 10H that mainly is contained in the second separate space 17 and which includes the high pressure tubing 103. The high-pressure part 10H is pressurized by means of a compressor 100 and the pressurized gas in the high pressure tubing 103 is thereafter moved into a heat exchanger device 101, where it will give away energy to the air flowing therethrough, which air enters into the inlet 804, passes through heat exchanger device 101 and leaves through the outlet 108. In the heat exchanger device 101 the gas in the high pressure tubing 103 will condense, at least partly. Before entering the low-pressure tubing 106 the pressure of the liquid/gas will be lowered by passing through an expansion device 102, that could be in a form of an expansion valve or a capillary tube, whereupon the temperature of the liquid in the low pressure tubing will drastically drop and thereby produce ice in the tubes 30, by cooling the cooling media 31 in the tubes 30.

Preferably, the boiling point of the refrigerant in the tubing 103, 106 is well below 0°C, e.g. around -5 to -15°C. In one example the refrigerant will have a temperature of about -15°C when entering into the low pressure tubing 106 and be evaporated by the cooling media 31 (first in water form), whereby an increase of about 5-15°C will occur, e.g. having a temperature of about -5°C at the inlet of the compressor 100. At this stage, the refrigerant has preferably been completely transformed from a fluid to a gas. In the compressor 100, the gas of the refrigerant is pressurized to increase its temperature, e.g. with about + 80-120°C and supplied into the pressurized tubing 103. Thereafter the refrigerant is lead into heat exchange device 101, where it is cooled to about + 40-50°C by the ambient air forced therethrough by means of the fan 105 and then condenses. After passing through the heat exchange device 101 it is again passed through the expansion device 102.

The compressor preferably has a relatively small capacity, i.e. in the range of 100-800W. Thanks to this arrangement, extra environmental advantages such as less material consumption upon manufacture and smaller energy requirements during operation, among others, may be gained and also advantages from a cost perspective may be gained due to the fact that compressors in this size are produced for domestic use in large series, e.g. to be used in refrigerators and freezers. The arrangement according to the invention may be optimized to fit certain conditions, e.g. working conditions, i.e. operated by means of the heat exchanger loop 10 for a longer time period to produce cooling media (e.g. 13-16 hours) than the cooling function is in use (e.g. 6-11 hours), which may enable use of a smaller compressor 100.

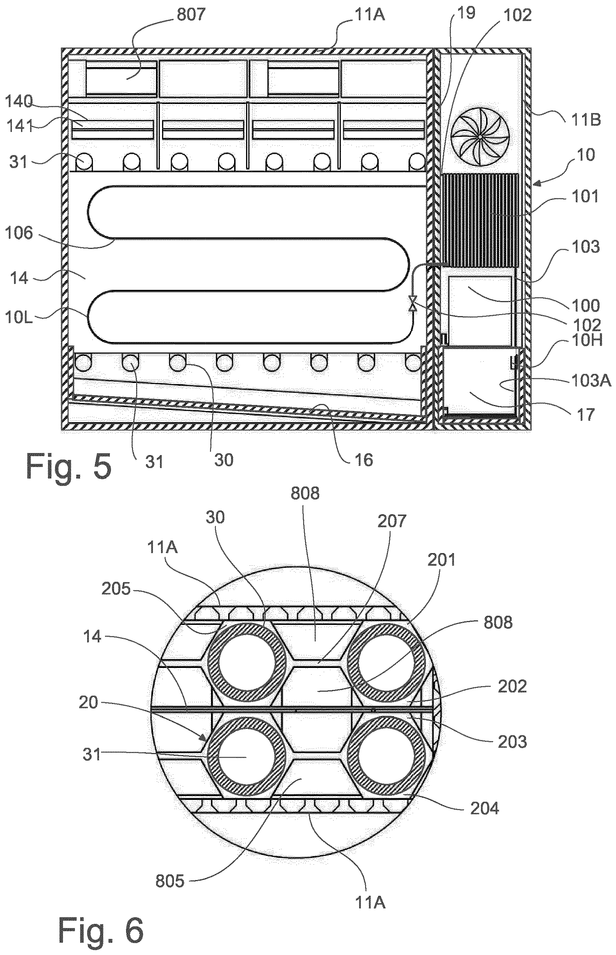

As shown in figure 4 and 5, not included in the invention,
a part 103A of the pressurized tubing 103 may be positioned to run through a water collection device 170 before running through the heat exchange device 101. As is evident the pressurized part 103 may of course run directly from the compressor to the air heat exchange device 101. An advantage of allowing part 103A of the pressurized tubing 103 to run into the water collection device 170 is that condensed water collected from the cooling space 17, via a collection channel 16, may then be evaporated. According to a preferred embodiment the collection channel 16 is in the form of a leaning trough that is positioned along the whole first space 17 under the longitudinal partition wall 14 and thereby also forms a lower wall of the return space 806. Thanks to having it leaning in the direction of the water collection device 170 condensed water will "automatically" flow towards the water collection device 170. Accordingly condensed water collected during active use of producing cooled air, may then during "inactive use" during production of cooling media 31 be automatically evaporated, which may eliminate need of emptying the water collection device 170.

Further, there is shown a preferred positioning and arrangement of the collection channel 16, such that when the water collection device 170 is full the water level will reach the lower edge of the longitudinal partition wall 14. As a consequence, no air can pass through the U-shaped flow channel 805, 806, 808. Hence, this is a smart adaptation of the condensation container space so that when it is full, the water blocks the air flow and therewith additional condensation water supply is eliminated, such that undesired spillage is avoided.

The basic principle of use of the air conditioning arrangement 1 in a user space, e.g. office room, according to the invention is that cooling media 31 is produced during a time period, normally during night, when the user space is not actively used by persons and that produced cooling media is used for cooling air of the user space during active time, normally day-time. A typical place for use of the air conditioning arrangement 1 according to the invention would be an office where the air conditioning arrangement 1 would produce cooling media, e.g. in the form of ice, during night-time and where during daytime the ice is allowed to melt for production of cool air to the surroundings. Also, the opposite may be applied, e.g. for homes, where the air conditioning arrangement 1 would be used for producing cool air during night-time and production of cooling media 31 would occur during daytime.

Production of cooling media 31 is achieved by activating the heat exchange loop 10 whereby air from the surroundings may be supplied by means of a fan 105 into an air flow channel having an inlet 107 within the second space 18 of the housing 11 and thereafter moved to pass through the heat exchanger device 101 wherein heat is rejected to the air passing through the heat exchanger when the cooling media in vapor phase condence within the pressurized part of the heat exchange loop. Thereafter the cooling media now mostly in liquid phase will be depressurized in a expansion device 102 whereupon the temperature will drop drastically and provide for cooling the cooling media 31 in the tubes 30.

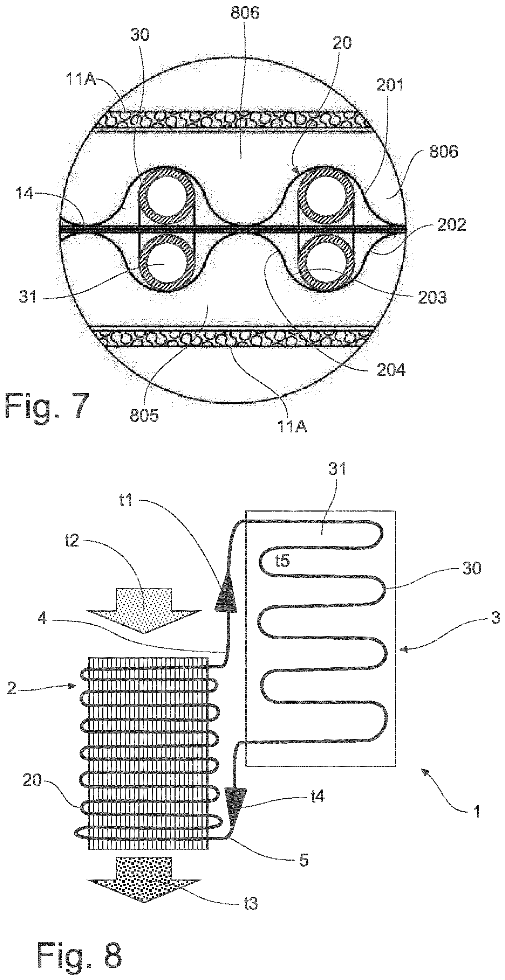

In figures 6 and 7, not included in the invention,
there are shown two different embodiments of how one may arrange the cooling media storage member 20, which preferably is made of metal to provide for good thermal conduction. In both embodiments there are arranged one such member 20 on each side of the longitudinal partitioning wall 14, such that there are created both air flow channels 805, 806 and hollow support channels 203, wherein the hollow support channels 203 are provided for containing the cooling media 31, e.g. by means of supporting tube formed members 30, containing the cooling media 31. The air flow channels 805, 806 may partly be delimited by surfaces 204 of the storage member 20 (see Fig 6), which surfaces 204 are facing in an opposite direction in relation to the surfaces of the support channels 203.

In the embodiment shown in figure 7 each storage member 20 is made from a corrugated plate 201, 202, e.g. sinusoidal, that has its valleys attached to the longitudinal partitioning wall 14, such that the hollow channels 203 for the cooling media 31 on one side are formed by the protruding parts of the corrugated plate 201, 202 in between the valleys and on the other side by the longitudinal partitioning wall 14. The air flow channels 805, 806 are partly delimited by surfaces 204 of the corrugated plates 201, 202, which surfaces 204 are facing in an opposite direction in relation to the surfaces of the support channels 203 and partly by the side walls of the housing 11, wherein preferably a layer of insulation (not shown) is arranged on the inside of the side walls. In this embodiment it is feasible to use loop formed tube formed members 30, e.g. bicycle inner tubes, which provides for a low-cost production, by means of arranging the loop formed tube formed members 30 prior to attaching the plates 201, 202. In an alternate embodiment the plates 201, 202 may be flat, which may prove a less costly product. However, a plate 201, 202 having a corrugated shape provides advantages, e.g. in that it provides a larger transfer area and also in that it may provide support channels 203.

In figure 6, not included in the invention,
the cooling media storage member 20 is in the form of an extruded wall member, e.g. aluminum, or made from step wise formed corrugated joined plate members, forming a hexagonal hollow body members 205. In the exemplary embodiment shown in figure 6, there is shown extruded members 20, in the form of hexagonal hollow body members 205, interconnected by connecting walls 207, wherein the support channels 203 are formed within the hexagonal bodies 205. The air flow channels 805, 806 are partly delimited by surfaces 204 of the extruded members 20, and partly by the side walls of the housing 11 and the longitudinal partitioning wall 14. Hence, this manner there will be formed dual air channels 806, 805 respectively for the air flow, one on each side of each connecting wall 207, which may provide for improved heat exchange. Furthermore, the hexagonal bodies 205 as shown in figure 6 may assist to support the rigidity of the housing 11 by being dimensioned to fill the gap on each side, between the longitudinal partitioning wall 14 and the inner face of the side walls of the housing 11. In this embodiment longish tube formed members 30 are used, either one each in each support channel 203, or a longer tube that has been bent to a U to fit into two parallel support channels 203.

As an alternative (not shown), to the embodiment shown in fig. 6, each cooling media storage member 20, may be built from two corrugated plates having semi hexagonal shape, such that two plates when attached to each other will present a body having the same basic design as shown in Fig. 6. An advantage with such an embodiment is that it facilitates use of loop formed tube formed members 30, i.e. by first attaching inner plates to the longitudinal partitioning wall 14, then position the loop formed tube formed members 30 and finally the outer plates.

The arrangement according to the invention provides a novel concept where the advantages of heat pump, in a very efficient manner, may be used to improve living conditions, wherein ice is used as the basic cooling media 31.

The invention is not to be seen as limited by the preferred embodiment described above, but can be varied within the scope of the claims, as will be readily apparent to the person skilled in the art. For instance, the different portions of the loops can be positioned in various manners, at separate locations within the arrangement.

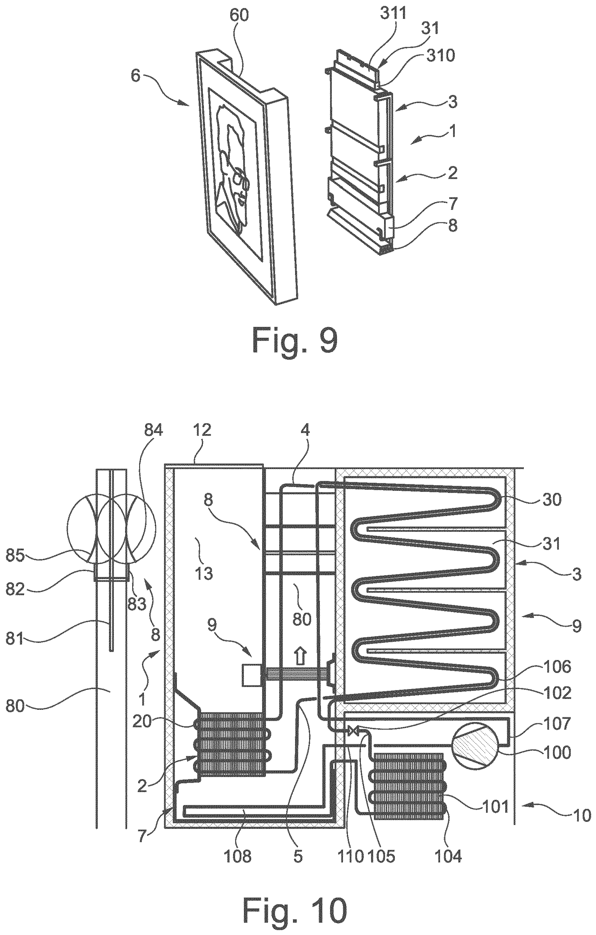

In Fig.8 there is schematically presented an air condition arrangement 1 in accordance with an embodiment according to the invention, wherein a "passive" arrangement (without any need of electronics) is used, e.g. hidden within a wall painting (see fig 9) that is positioned on the wall above the head end of a bed.

The air condition arrangement 1 includes an evaporator 2 and a condenser 3 connected in a heat exchange loop 20, 4, 30, 5, which is of a conventional kind with a tubing containing a heat exchange fluid, e.g. water/air mixture (at under pressure) or a refrigerant such as R134a (tetrafluoroethene, CH₂FCF₃). Said tubing forming a closed loop inside the air condition arrangement 1. Preferably water may be used to minimise any risk in the case of leakage. The boiling point of the fluid used has to be lower than ambient air t2, e.g. around 15 to 30°C lower than t2. The air will then evaporate the fluid in the evaporator 2 and thereby give off heat, which increases the density of the air causing a downward flow of air through the evaporator 2. The air will then leave the evaporator 2 at the bottom thereof at lower temperature t3, thereby providing a flow of cold air. Within the tubing 20 of the evaporator 2 the incoming fluid has a temperature t4 of about the boiling point, e.g. 5°C that provides it in at least partly liquid state. In the evaporator 2 the fluid will be heated by the down flowing air, such that the fluid in the tubing 4 after the evaporator 2 will have a temperature t1 that is about 5-20 °C higher than t4, e.g. 15°C.

From the evaporator 2 the tubing 4 leads into the condenser 3. Here within the condenser 3 the tubing 30 gets in contact with a cold media 31. The cold media, may be ice or very cold water, or a mixture thereof, having a temperature t5 of about +2-0 °C. As a consequence the fluid will condense and move downwards, causing circulation within the loop 20,4, 30, 5. As long as ice is melting in the cold media 31 the process will continue by itself and provide a down ward flow of cold air.

In Fig. 9 it shown that the arrangement 1 may be arranged for within a flat wall member 6, e.g. within a hidden space 60 at the back of a wall painting, that may positioned on the wall above the head end of a bed, to provide cold air down onto a person lying in a bed (not shown). The cold media 31 may be arranged for by means of ice packs 310 that are positioned in a metallic holder 311 that is in contact with the tubing 30 of the condenser 3, i.e. ice packs that have been cooled in freezer.

Accordingly, these ice packs 310 will act as drivers for the process, which will start as soon as the ice packs 310 are loaded into the metallic holder 311. Preferably there is arranged an adjustable air flow control device 8 (e.g. adjustable fins) at the bottom, by means of which the air can be directed in a desired direction. Further there is preferably arranged a condense container 7, that may collect any condense that may drip from the arrangement 1.

In Fig. 10 there is shown a further embodiment, according to the invention, wherein the air condition arrangement 1 as shown in Figs. 8 and 9 includes a second heat exchanger loop 10 that is arranged for producing ice 31 within the condenser when the air condition arrangement is not in active use. The second heat exchanger loop 10 is of a conventional kind with a tubing containing a refrigerant such as R134a. The tubing 103, 104, 106, 107 forms a closed loop inside the air condition arrangement 1.

A low pressure part 106 leads from an expansion valve 102 into the interior of the condenser 3 where it will cool the media 31, i.e. water, therein and create ice. Preferably, the boiling point of the refrigerant is well below 0°C, e.g. around -5 to - 15°C. In one example the refrigerant will have a temperature of about -15°C when entering into the condenser 3 and evaporated by the media (first in water form), whreby an increase of about 5-15°C will occur, e.g. having a temperature of about -5°C at the outlet and the tubing part 107 before the compressor 100. At this stage, the refrigerant has been completely transformed from a fluid to a gas. In the compressor 100, the gas of the refrigerant is pressurized to increase its temperature, e.g. with about + 80-120°C and supplied into a pressurized part 103. The pressurized part 107 may be lead through a condense container 7, to possibly evaporate remaining water in the condense container 7. Thereafter the refrigerant is lead into a spirally arranged heat exchange tubing 104, where it is cooled to about + 40-50°C by the ambient air. After passing through the tubing 104 it is again transferred through the expansion valve 102.

The compressor preferably has a relatively small capacity, i.e. in the range of 100-800W. Thanks to this arrangement, extra environmental advantages such as less material consumption upon manufacture and smaller energy requirements during operation, among others, may be gained and also advantages from a cost perspective may be gained due to the fact that compressors in this size are produced in large series, e.g. to be used in refrigerators.

As is clear from Fig. 10 the basic functioning of the air condition arrangement 1 is the same as has been described in connection with Fig. 8, i.e. the cooling media 31 will arrange for causing a drive of circulations of the fluid in the tubing 20,4, 30,5 and also the flow of air through the evaporator 2. Further, as is shown in Fig. 10 there is arranged an air outlet channel 80 wherein a fan 90 is arranged to enforce the air flow after leaving the evaporator 2. As is shown this channel preferably is a separate channel 80 directed vertically and that may guide the air flow upwards to an air flow direction device 8. Basically, the design as shown in the right-hand part of Fig. 10 may be seen to represent a partitioning wall 9 wherein the air conditioning arrangement 1 according to the invention has been applied. Accordingly, there is also an inlet channel 13 that in this embodiment preferably is arranged vertically parallel with the outlet channel 80, so that the inflow of air is made at the left-hand, upper part of the partitioning wall and then moving downwards to and through the evaporator 2 turning 180° up through the channel 80 to thereafter be diverted in the desired manner at one or both sides of the partitioning wall 9. Preferably there is arranged a lid 12 that may block air from flowing in to the inlet channel

In the left-hand side of Fig. 10 there is shown in more detail (by a cross section through the arrangement in channel 80) an embodiment of arranging for an air flow direction device 8, wherein there is arranged a dividing member 81 within the outlet channel 80, thereby dividing the outlet channel to a first and second sub channels, each sub channel may be closed or opened by means of an on/off valve device 82, 83. Above the on/off valve device 82, 83 there is positioned adjustable air diverters 84, 85 that may be adjustably positioned to direct the air flow in a desired manner. Accordingly, the design shown in Fig. 10 may be used to supply cold air to both sides of the partitioning screen, i.e. to individually adapt the flow of cooling air on an individually desired basis at each side thereof.

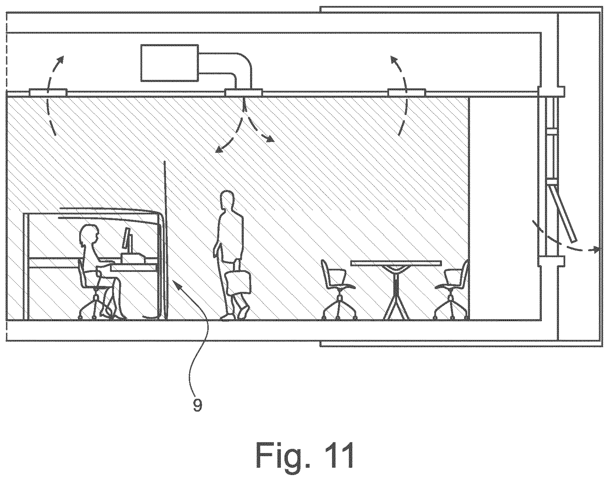

Fig.11 schematically shows how the inventive arrangement 1 may be used in an office room, wherein a partitioning wall 9 in accordance with an embodiment according to the invention has been positioned therein, providing cool air to a staff member sitting at a desk nearby the partitioning wall 9. As indicated, the air supply for cooling of the refrigerant is preferably supplied from above and also let out at the top, assisting in improving the distribution of hotter air near the ceiling of the room.

The invention is not limited by the appended claims, but may be varied within the enclosure of the application seen as whole. For instance, it is foreseen that one or more divisional applications may be filed, e.g. providing protection for the modified embodiments presented in figures 8-11.

## Claims

1. Air condition arrangement for cooling of a space, comprising a cooling heat exchanger loop (20, 4, 30, 5) having a fluid in operational connection with an evaporator (2) and a condenser (3), wherein a cooling media (31), preferably having a temperature in the range of 0- +2 °C, in said condenser (3) is arranged to absorb heat from said fluid, which fluid in turn absorbs heat from air flowing through said evaporator (2) to provide a cooled air flow out from said air condition arrangement (1), **characterized in that** said cooling media (31) at least partly includes ice and that said cooling media (31) is arranged to drive said heat exchanger loop (20, 4, 30, 5).

2. Air condition arrangement according to claim 1, wherein said air condition arrangement (1) is also connected to a second heat exchanger loop (10) arranged to produce said cooling media (31) in the form of ice within said condenser (3), wherein the tubing (103, 104, 106, 107) forms a closed loop inside said air condition arrangement (1).

3. Air condition arrangement according to claim 1 or 2, wherein said air condition arrangement (1) is, at least partly, hidden within an object (6,9).

4. Air condition arrangement according to claim 1, 2 or 3, wherein a fan (90) is arranged to assist said air flow in a direction towards said outlet.

5. Air condition arrangement according to any preceding claim, wherein an air inlet is located at an upper end of said air condition arrangement (1), and preferably wherein an air outlet is located at an upper part of said air condition arrangement (1).

6. Air condition arrangement according to any preceding claim, wherein the incoming fluid of the incoming tubing (20) of the evaporator (2) is arranged to have a temperature (t4) of about the boiling point providing the fluid in at least partly liquid state, wherein said fluid will be heated by the down flowing air in the evaporator (2), such that the fluid in the tubing (4) after the evaporator (2) leading to the condenser (3) will have a temperature (t1) that is in the range of 5-20 °C higher than the incoming temperature (t4).

7. Air condition arrangement according to any preceding claim, wherein said heat exchange fluid is water/air mixture at under pressure, having a boiling point lower than ambient air (t2), preferably in the range of 15 to 30°C lower than the temperature of ambient air (t2).

8. Air condition arrangement according to claim 3, wherein said object (6,9) is substantially flat shaped, having a vertical extension that substantially exceeds the width thereof, wherein preferably vertical extension at least exceeds the width three times.

9. Air condition arrangement according to any preceding claim, wherein said evaporator (2) is arranged to create a downwardly directed self-draught of air through said evaporator (2).

10. Air condition arrangement according to any preceding claim, wherein there is arranged a partitioning wall (9) to which the air conditioning arrangement (1) according to the invention has been applied, wherein preferably said partitioning wall (9) provides an inlet channel (13) on one side thereof and an outlet channel (80) on the other side.

11. A method for cooling of a space, comprising a heat exchanger loop (20, 4, 30, 5) having a fluid in operational connection with an evaporator (2) and a condenser (3), wherein a cooling media (31) in said condenser (3) is arranged to absorb heat from said fluid, which fluid in turn absorbs heat from air flowing through said evaporator (2) to provide a cooled air flow out from said air condition arrangement (1), **characterized in that** said cooling media (31) at least partly includes ice and that said cooling media (31) drives said heat exchanger loop (20,4,30,5).

12. A method for cooling of a space according to claim 10, wherein a downwardly directed self-draught of air is created through said evaporator (2) and by said cooling commencing by exposing said ice for melting contact with heat extracted from ambient air.

13. A method for cooling of a space according to claim 10, wherein self-regulated termination of said cooling is arranged for in connection with having melted all ice.
